# EUROPEAN PATENT APPLICATION

(11) **EP 0 694 361 A1**
(43) Date of publication of application: **31.01.1996**
(21) Application number: 95111792.8
(22) Date of filing: 27.07.1995
(51) Int. Cl.: B23K 26/18, B23K 26/06, H01S 3/08

(54) **Laser etching of transverse mode discrimination apertures on ring laser gyro mirrors**

(30) Priority: 27.07.1994 US 281390
(71) Applicant: HONEYWELL INC., Minneapolis Minnesota 55408 (US)
(72) Inventor: Curran, Robert M., Mendota Heights, Minnesota 55118 (US)
(74) Representative: Rentzsch, Heinz, Dipl.-Ing.

(57) **Abstract**

For etching a mirror for use in laser applications a protective layer (30) is formed on the mirror (20). The mirror is then masked to provide an etch region (35). The etch region is then etched using an eximer laser. After etching, the protective layer is removed.

## Description

The present invention is related to mirror substrate combinations, and more particularly to mirror substrate combinations used in Ring Laser Gyroscopes.

In Ring Laser Gyros, there are a number of transverse electromagnetic modes (TEM's) present. A primary mode is selected, usually TEM₀₀ and then all other modes are usually suppressed. There are a number of ways of suppressing these unwanted modes.

US-A 4,627,732, teaches a mirror substrate combination which has been treated with an electron beam. The electron beam may be produced using a scanning electron microscope. The physical structure of the minor material is altered in order to cause a phase change to occur which suppresses the unwanted modes.

Another prior art method of mode suppression is taught by US-A 4,519,708 whereby an absorptive material is deposited on the minor for absorbing some of the energy of the unwanted mode.

Problems existed with these prior art methods. In the method of US-A 4,627,732, the mirror had to be exposed to the electron beam for four hours to accomplish the desired result. In the method of US-A 4,519,708, deposition of the light absorbing material was difficult for small mirrors.

Accordingly, it is an object of the present invention to overcome these difficulties encountered with the prior art.

The present invention as characterized in claim 1 discloses a method for making mirror substrate combinations which perform mode suppression. After a mirror substrate combination is constructed, a mask is deposited onto a low ultraviolet absorbing glass. Next, a pattern is chosen for the aperture to be etched onto the mirror coating by an eximer laser. The mask is then placed in the laser beam path and the laser is powered up and set to a desired wavelength. The mirror itself is then cleaned and has a thin splatter protective layer placed on top of the mirror. The mirror substrate combination is then mounted on a stage which is placed in the path of the eximer laser beam. The aperture is then laser scribed into the mirror's surface to a prescribed depth. Lastly, the splatter protective layer is removed. Preferred details of the method are characterized in the dependent claims.
The process and the mirror substrate combination that it will produce will be further described with reference to the following figures. Therein
- Figure 1: is a side view of a prior art mirror substrate combination used in laser applications.
- Figure 2: is a plan view of a laser, a mask and a target mirror substrate combination.
- Figure 3: is a side view of the mirror substrate combination of Figure 1 after being etched by the laser.
- Figure 4: is a front view of the mirror substrate combination of Figure 3.
- Figure 5: is a front view of the mask shown in Figure 2.

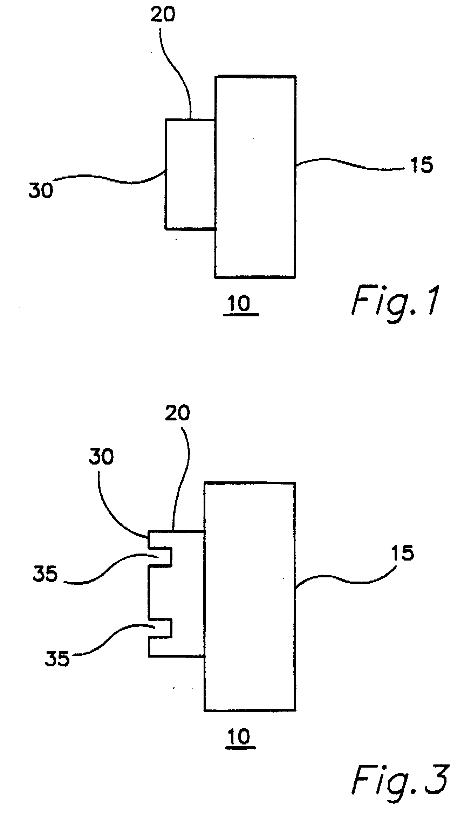

In Figure 1, is shown a sample mirror substrate combination 10 as would be used in a laser application. The mirror 20 is constructed from regions having varying indices of refraction. Substrate 15, which may be made from fused silica glass is placed into a process whereby regions of a material having a high index of refraction such as TiO₂ are interleaved with regions of a material having a low index of refraction such as SiO₂. Such a method of making mirrors is well known in the art. A front face 30 is the surface to be etched in accordance with the invention.

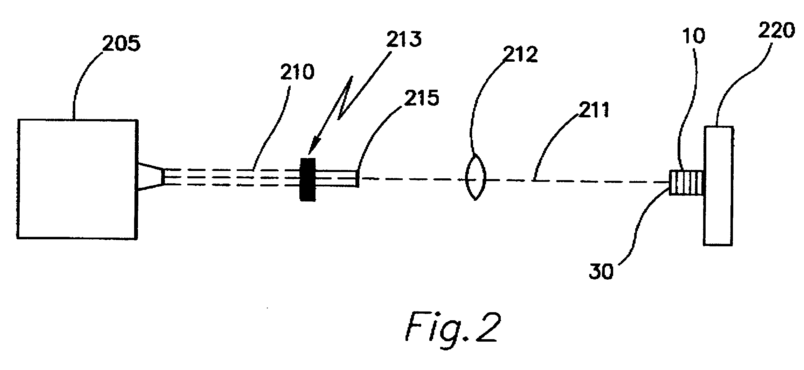

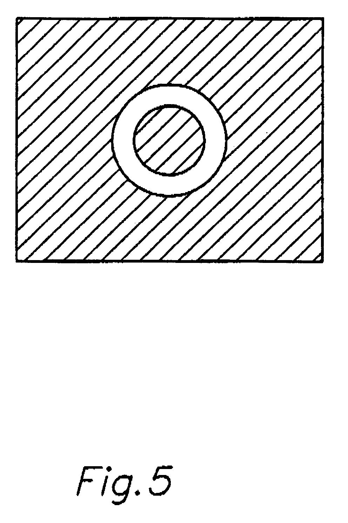

Figure 2, shows a system for laser etching an aperture into mirror 20 including Eximer laser 205, focusing optics 212, shutter 213, mask 215 and target holder 220. In a preferred embodiment, mask 215 may be made by sputter depositing 1000-5000nm of chrome on a 1" by 1" UV transparent slide. Next, photoresist is deposited on the slide and exposed through a positive mask identical to that shown in Figure 5. The photoresist is then developed and dissolved from the unexposed portion (annular area). In the preferred embodiment, the inner diameter of the annular area is 3,05 mm (0.120 inches) and the outer diameter is 5,08 mm (0.200 inches). Lastly, the chrome is stripped away using an etchant leaving the annular area shown in Figure 5.

The mirror must be prepared for etching. Preparations include: thoroughly cleaning the mirror surface with a cleaner such as acetone; forming a protective layer such as through sputter depositing 50nm layer of chromium on face 30; and identifying the area of the mirror to be etched such that the area of the mirror that will reflect TEM₀₀ is free of surface defects.

An eximer laser such as Lambda Physik LPX110i is used as a UV laser source. The eximer laser is filled with KrF gas and configured to operate at 248 nm. In the preferred embodiment, the laser pulse rate is set to approximately one pulse per second, pulse duration of 2230 nano-seconds and laser pulse energy is set to approximately 10 millijoules as measured at target 30. The mirror is then mounted on target holder 220. Focusing optics 212 and mask 215 are adjusted to cause a factor of four linear demagnification of the image of mask 215 onto the target mirror surface 30. The mask 215 is made a factor of four larger in diameter than the desired pattern to be etched onto the target mirror surface 30, thus the four-fold demagnification. The mask size and focusing optics causes sixteen times as much laser power to be concentrated from the laser beam onto the target mirror surface 30 than if the mask 215 size was equal in size to the desired aperture pattern on the target mirror surface 30.

Etching of the mirror is done by opening shutter 213 for one or more pulses thereby exposing the target mirror surface 30 to the pulses. Shutter 213 may be made of a material which blocks ultra-violet light, such as aluminum. With the preferred pulse rate and duration, the shutter may be manually operated by simply inserting and removing the shutter into the laser beam. Test etches may be made to determine the location of the etching, depth of etching, size of the etch pattern, and goodness of focus or aperture edge definition. Adjustments to the focusing optics 212 and mask 215 location may be made to adjust size of the aperture pattern and aperture edge definition. For this purpose the laser may be defocused linearily by a predetermined factor.

After the etching is completed, the protective layer is removed. A chrome etchant, such as a 1 to 1 mixture (by volume) of 20% (by weight) of aqueous potassium ferricyanide (K₃Fe(CN)₆) to 20% (by weight) of aqueous potassium hydroxide (KOH), is used to strip the chromium off the mirror face.

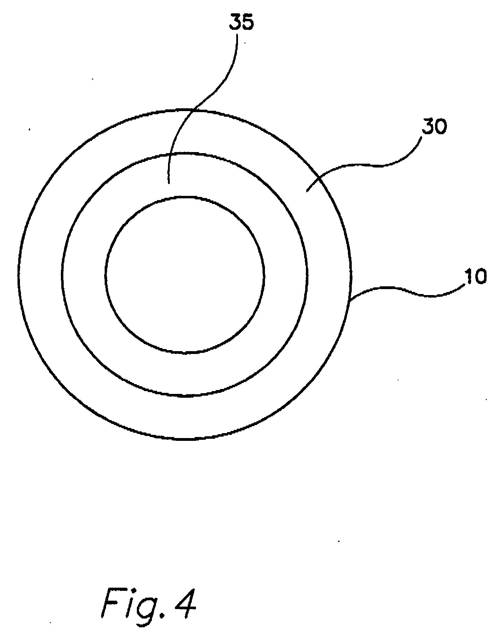

As a result, the mirror of Figures 3 and 4 is created. Note that material is actually removed from the face 30 of the mirror unlike the method taught by US-A 4,519,708. While the cutting in Figure 3 has extended only into the first region 35, approximately 500 Angstroms, cutting depth is a function of laser power and the number of laser pulses the mirror is exposed to.. In some situations, deeper cuts may be desired. The cut results in an annulus region on the mirror which is struck by the undesired mode. The annulus region causes scatter to occur which induces losses greater than the available gain. By introducing such loss to the undesired mode, the mode is suppressed.

## Claims

1. A method for etching a mirror having a reflective region mounted on a substrate, comprising the steps of:
a) forming a protective layer on a portion of the mirror;
b) masking the mirror to provide an etch region on said reflective region;
c) laser etching the etch region by cutting said reflective mirror using a beam from a laser; and
d) removing the protective layer.

2. The method of claim 1, comprising the further step of cleaning the mirror prior to depositing said protective layer.

3. The method of claim 1 or 2, **characterized by**
stopping said cutting of said reflective region before reaching said substrate.

4. The method of claim 3, **characterized by**
stopping said cutting when said reflective region has been cut to a depth of approximately 50 Angstroms.

5. The method of one of the claims 1 to 4, **characterized by**
masking the mirror from said laser such that a ring shaped etch region is formed on said mirror.

6. The method of one of the preceding claims, **characterized by** pulsing the laser beam during said laser etching step.

7. The method of one of the preceding claims, **characterized by** forming said protective layer by sputtering chromium onto a surface of the mirror to be etched.

8. The method of claim 7, wherein the protective layer is removed by etching said protective layer using a chromium etchant.

9. The method of one of the preceding claims, **characterized by**
defocusing linearly said laser beam by a predetermined factor.
